# EUROPEAN PATENT APPLICATION

(11) **EP 4 664 578 A1**
(43) Date of publication of application: **17.12.2025**
(21) Application number: 25180909.1
(22) Date of filing: 04.06.2025
(51) Int. Cl.: H01M 10/04, H01M 10/0587, H01M 50/533, H01M 50/538

(54) **ELECTRODE ASSEMBLY AND BATTERY CELL HAVING THE SAME**

(30) Priority: 04.06.2024 KR 20240073193
(71) Applicant: SK On Co., Ltd., Seoul 03161 (KR)
(72) Inventor: Son, Hye Been, Daejeon 34124 (KR); Shin, Jae Sik, Daejeon 34124 (KR); Oh, Won Je, Daejeon 34124 (KR)
(74) Representative: Stolmár & Partner Patentanwälte PartG mbB

(57) **Abstract**

The present disclosure relates to an electronic assembly including a first electrode including a first uncoated portion, a first flag portion formed by extending a part of the first uncoated portion, and a first extension portion connecting the first uncoated portion and the first flag portion, a second electrode, and a separator arranged between the first electrode and the second electrode, wherein the first electrode, the second electrode, and the separator are wound in a form of a roll around a virtual winding center, and wherein the first flag portion comprises at least one inner bent region bent in the winding center direction and at least one outer bent region bent in an opposite direction to the winding center direction.

## Description

### BACKGROUND OF THE INVENTION

### 1. Field

The present disclosure relates to an electrode assembly and a battery cell.

### 2. Description of the Related Art

Types of lithium secondary batteries include cylindrical, prismatic, pouch-type battery cells, etc. Among these battery cells, a cylindrical battery cell is formed by winding a separator, which is an insulator, between an anode and a cathode to form an electrode assembly in the form of a jelly roll, and inserting the electrode assembly into a cylindrical case along with an electrolyte to form a battery.

A conventional cylindrical battery cell has a structure in which a strip-shaped electrode tab is connected to an uncoated portion of each of a cathode and an anode, and the electrode tab is connected to an electrode terminal (or a terminal portion) and a case. The conventional cylindrical battery cell having this structure, however, has high resistance, high heat generation, and poor current collection efficiency because current is concentrated on the strip-shaped electrode tab coupled to the anode uncoated portion and/or the cathode uncoated portion.

In order to avoid this, a tab-less battery cell in which a cathode uncoated portion and an anode uncoated portion are arranged at an upper end and a lower end of a jelly roll type electrode assembly, respectively, and a current collector plate is welded to these uncoated portions has been presented. In the case of the tab-less battery cell, the uncoated portions are bent to increase the welding area and then welded with the current collector plate.

However, it is difficult to visually confirm the welded portion during the process of welding the bent uncoated portion to the current collector plate, and the contact efficiency between one end portion of the bent uncoated portion and the current collector plate is deteriorated. In addition, when welding is performed in a state where the bent uncoated portion and the current collector plate are not in proper contact with each other, the welding quality between the uncoated portion and the current collector plate may be deteriorated, which may increase a defect rate of manufactured battery cells.

### SUMMARY OF THE INVENTION

An aspect of the present disclosure is to provide an electrode assembly and a battery cell capable of improving contact efficiency between an electrode and a current collector plate.

Another aspect of the present disclosure is to provide an electrode assembly and a battery cell capable of improving welding quality.

Another aspect of the present disclosure is to provide an electrode assembly and a battery cell capable of reducing a defect rate.

The present disclosure can be widely applied to electric vehicles, battery charging stations, and other green technology fields such as photovoltaics and wind power using batteries. In addition, the present disclosure may be used in eco-friendly electric vehicles, hybrid vehicles and the like to prevent climate change by suppressing air pollution and greenhouse gas emissions.

An electronic assembly according to embodiments of the present disclosure may include a first electrode including a first uncoated portion, a first flag portion formed by extending a part of the first uncoated portion, and a first extension portion connecting the first uncoated portion and the first flag portion, a second electrode, and a separator arranged between the first electrode and the second electrode, wherein the first electrode, the second electrode, and the separator are wound in a form of a roll around a virtual winding center, and wherein the first flag portion comprises at least one inner bent region bent in the winding center direction and at least one outer bent region bent in an opposite direction to the winding center direction.

The first extension portion may be bent in the winding center direction, and a first bent region of the first flag portion adjacent to the first extension portion may be an inner bent region.

A bending angle of the first extension portion and a bending angle of the at least one inner bent region of the first flag portion may be different from each other.

The at least one inner and/or outer bent region of the first flag portion may have an angled shape.

The at least one inner and/or outer bent region of the first flag portion may have a rounded shape.

The first flag portion may be separated by a predetermined starting distance from one end located at a central portion of the first electrode wound around the virtual winding center in a direction in which the first electrode is wound in the form of the roll.

The second electrode may include a second uncoated portion, a second flag portion formed by extending a part of the second uncoated portion, and a second extension portion connecting the second uncoded portion and the second flag portion, and the second flag portion may include at least one inner bent region bent in the winding center direction and at least one outer bent region bent in an opposite direction to the winding center direction.

A battery cell according to embodiments of the present disclosure may include an electrode assembly in which a first electrode, a second electrode, and a separator arranged between the first electrode and the second electrode are wound in a form of a roll around a virtual winding center, a case receiving the electrode assembly, and a terminal portion protruding from the case, wherein the first electrode includes a first uncoated portion, a first flag portion formed by extending a part of the first uncoated portion, and a first extension portion connecting the first uncoating portion and the first flag portion, and wherein the first flag portion includes at least one inner bent region bent in a winding center direction and at least one outer bent region bent in an opposite direction to the winding center direction.

The first extension portion may be bent in the winding center direction, and a first bent region of the first flag portion adjacent to the first extension portion may be an inner bent region.

The at least one inner and/or outer bent region of the first flag portion may have an angled shape.

The at least one inner and/or outer bent region of the first flag portion may have a rounded shape.

The battery cell may further include a current collector plate connected to the first flag portion, and the at least one inner bent region of the first flag portion may be in contact with the current collector plate.

An end of the first flag portion may be in contact with the current collector plate.

The first flag portion may include a plurality of regions in contact with the current collector plate in a radial direction.

The second electrode may include a second uncoated portion, a second flag portion formed by extending a part of the second uncoated portion, and a second extension portion connecting the second uncoated portion and the second flag portion, and the second flag portion may include at least one inner bent region bent in the winding center direction and at least one outer bent region bent in an opposite direction to the winding center direction.

### BRIEF DESCRIPTION OF THE DRAWINGS

FIG. 1 is a perspective view schematically illustrating a battery cell including an electrode assembly according to the present disclosure.
FIG. 2 is a perspective view schematically illustrating an electrode assembly according to an embodiment of the present disclosure.
FIG. 3 is an enlarged view of an area P of FIG. 2.
FIG. 4 is a cross-sectional view taken along line I-I' of FIG. 1.
FIG. 5 is an enlarged view of an area Q of FIG. 4.
FIG. 6 is a plan view schematically showing the shape of an electrode of FIG. 4 before winding.
FIG. 7 is a cross-sectional view showing a modification of FIG. 4.
FIG. 8 is an enlarged view of an area R of FIG. 7.
FIG. 9 is a plan view schematically showing the shape of an electrode of FIG. 7 before winding.

### DETAILED DESCRIPTION

Hereinafter, the present invention will be described in detail with reference to the accompanying drawing. However, such embodiments described with reference to the accompanying drawing are provided to further understand the spirit of the present invention and do not limit subject matters to be protected as disclosed in the detailed description.

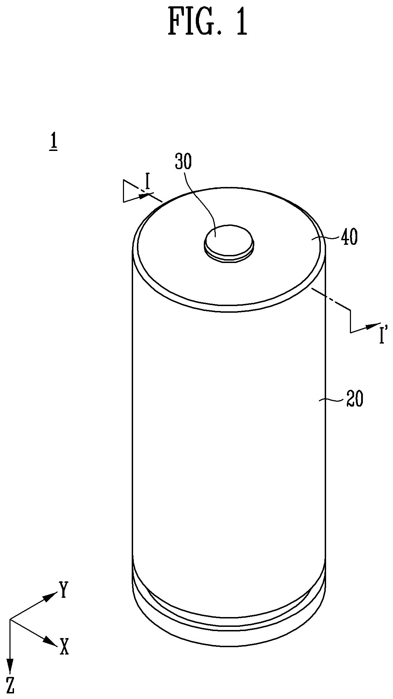

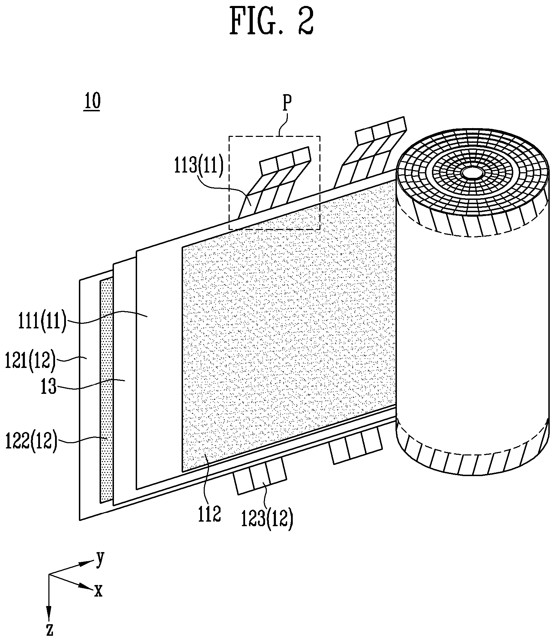

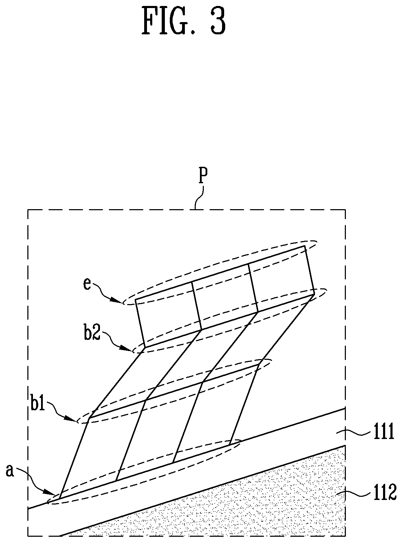

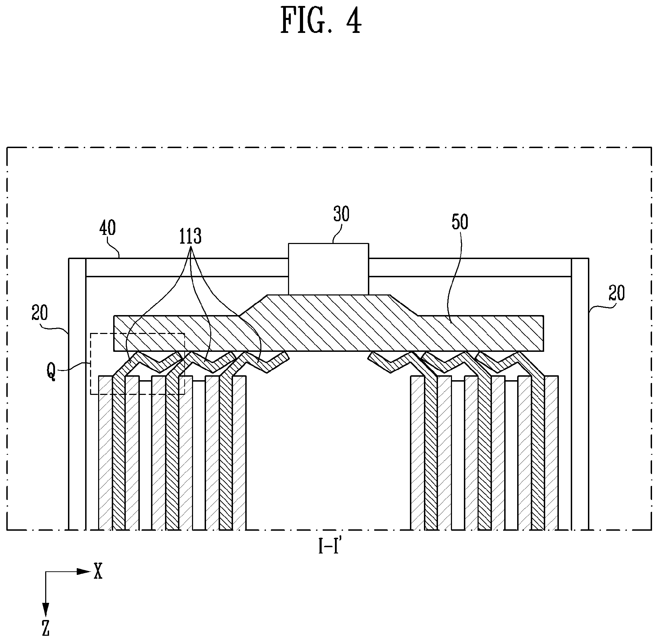

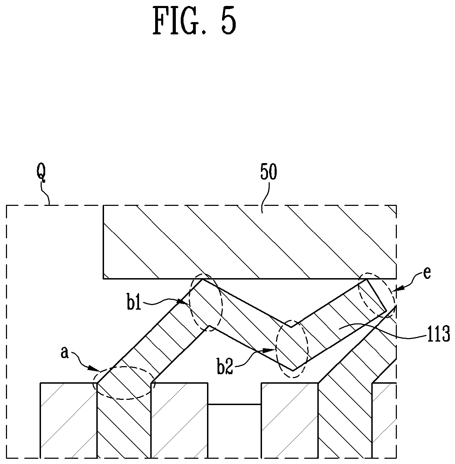

The present disclosure relates to an electrode assembly. FIG. 1 is a perspective view schematically illustrating a battery cell including an electrode assembly according to the present disclosure. FIG. 2 is a perspective view schematically illustrating an electrode assembly according to an embodiment of the present disclosure. FIG. 3 is an enlarged view of an area P of FIG. 2. FIG. 4 is a cross-sectional view taken along line I-I' of FIG. 1. FIG. 5 is an enlarged view of an area Q of FIG. 4.

Referring to FIGS. 1 to 5, an electrode assembly 10 according to an embodiment of the present disclosure includes: a first electrode 11 including a first uncoated portion 111, a first flag portion 113 formed by extending a part of the first uncoated portion 111, and a first extension portion (a) connecting the first uncoated portion 111 and the first flag portion 113; a second electrode 12; and a separator 13 arranged between the first electrode 11 and the second electrode 12; in which the first electrode 11, the second electrode 12, and the separator 13 may be wound in the form of a roll around a virtual winding center.

The first flag portion 113 may include one or more inner bent regions b1 bent in a winding center direction and one or more outer bent regions b2 bent in an opposite direction to the winding center.

A cylindrical battery cell includes an electrode assembly in which a cathode, an anode, and a separator stacked between the cathode and the anode are wound. In the wound electrode assembly, when a strip-shaped electrode tab is used to connect the anode and the cathode to external terminals and a case, heat may be generated and current collection efficiency may be lowered due to high resistance and current concentration. To avoid this, a so-called tab-less battery cell using an uncoated portion as an electrode tab has been proposed, but the contact efficiency during the welding of the uncoated portion and the current collector plate is low, which may reduce the welding quality and increase the defect rate of manufactured battery cells. In contrast, an electrode assembly according to the present disclosure includes a first flag portion which is bent at least once in a winding axis direction and an opposite direction to the winding axis direction each, so that the contact efficiency with a current collector plate may be improved, the welding quality may be improved, and a defect rate of manufactured battery cells may be reduced.

The electrode assembly 10 according to the present disclosure may include the first electrode 11 including the first uncoated portion 111, the first flag portion 113 formed by extending a part of the first uncoated portion 111, and the first extension portion (a) connecting the first uncoated portion 111 and the first flag portion 113.

The first electrode 11 may include a first current collector, a first active material layer 112, and the first uncoated portion 111. The first current collector may be, but is not limited to, metal foil such as copper or aluminum. The first active material layer 112 may be formed on at least one surface of the first current collector, and may be arranged in contact with the first current collector.

The first uncoated portion 111 may refer to a region where the first active material layer 112 is not arranged on the first current collector of the first electrode 11. The first uncoated portion 111 may be arranged on one or more of two long sides of the first electrode 11, but the present disclosure is not limited thereto.

The first flag portion 113 may be formed by extending a part of the first uncoated portion 111. The first flag portion 113 may be formed by cutting the first uncoated portion 111. The first flag part 113 may be connected to the first uncoated portion 111 through the first extension portion (a). The first flag portion 113 may be partitioned by the region where the first uncoated portion 111 is cut and the first extension portion (a), and the first flag portion 113 may include a plurality of first flags partitioned by the region where the first uncoated portion 111 is cut and the first extension portion (a). The first flag portion 113 may serve as an electrode tab in a battery cell including the electrode assembly according to the present disclosure, and may be welded and connected to a current collector plate to be described below.

The first flag portion 113 of the electrode assembly according to the present disclosure may include the inner bent region b1 which is bent toward the winding center of the electrode assembly 10, and may further include the outer bent region b2 which is bent toward a direction opposite to the winding center in addition to the inner bent region b1.

In an embodiment of the present disclosure, the first extension portion (a) of the electrode assembly 10 according to the present disclosure is bent in the winding center direction, and the first bent region of the first flag portion 113 adjacent to the first extension portion (a) may be the inner bent region b1. In one example, the inner bent region b1 and the outer bent region b2 of the first flag portion 113 of the electrode assembly 10 according to the present disclosure may be alternately arranged. The alternating arrangement of the inner bent region b1 and the outer bent region b2 of the first flag portion 113 may mean that the inner bent region b1 and the outer bent region b2 are placed alternately, and also mean that the first flag portion 113 has a zigzag shape. A bent region adjacent to the first bent region of the first flag portion 113 of the electrode assembly 10 according to the present disclosure may be the outer bent region b2.

In an embodiment of the present disclosure, a bending angle of the first extension portion (a) of the electrode assembly 10 and a bending angle of the inner bent region b1 of the first flag portion 113 according to the present disclosure may be different from each other. In the manufacturing process of the electrode assembly, an electrode uncoated portion protruding up and down of the electrode assembly is folded by a flattening process. In the electrode assembly 10 according to the present disclosure, the first uncoated portion is folded with respect to the first extension portion (a) during the flattening process. This allows the first extension portion (a) to be bent at a different angle than the bent area of the first flag 113. The bending angle of the first extension portion (a) may be, for example, 60° or more and 120° or less, but the present disclosure is not limited thereto. In addition, the bending angle of the inner bent region b1 of the first flag portion 113 may be, for example, 0° or more and less than 180°, but the present disclosure is not limited thereto.

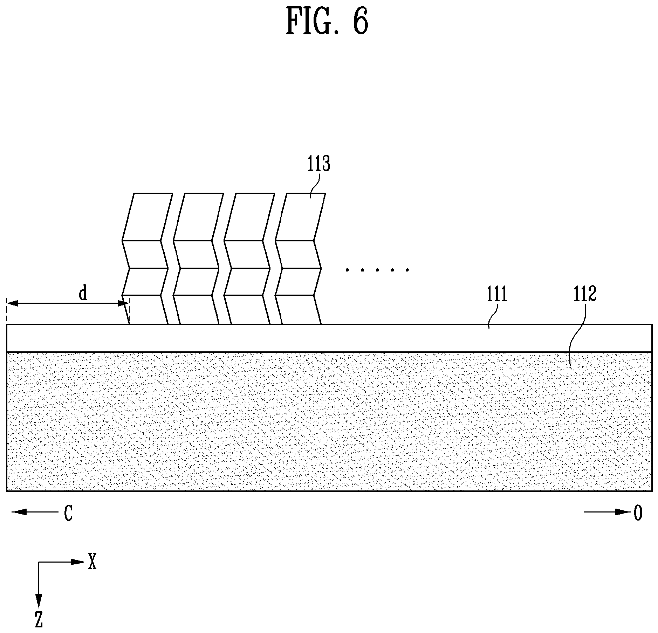

In one example, the inner and/or outer bent region of the first flag portion 113 of the electrode assembly 10 according to the present disclosure may be angled. FIG. 5 is an enlarged view of the area Q of FIG. 4, and FIG. 6 is a plan view schematically showing the shape of an electrode of FIG. 4 before winding. Referring to FIGS. 5 and 6, the first flag portion 113 of the electrode assembly 10 according to the present disclosure may include the inner bent region b1 in which the first flag portion 113 is bent in the winding center direction of the electrode assembly 10, and the inner bent region b2 may have an angled shape defining a predetermined angle. In addition, the first flag portion 113 of the electrode assembly 10 according to the present disclosure may include the outer bent region b2 bent in a direction opposite to the winding center direction, and the outer bent region b2 may have an angled shape defining a predetermined angle.

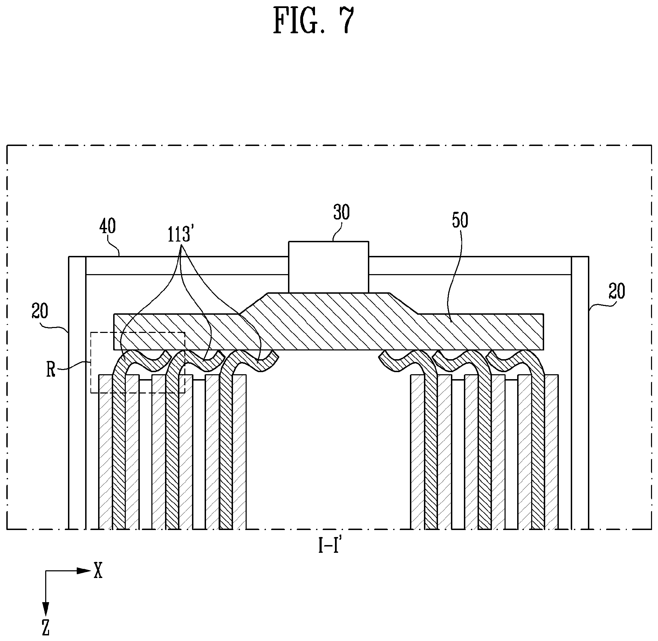

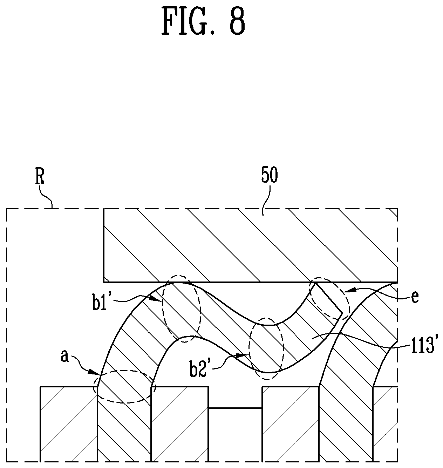

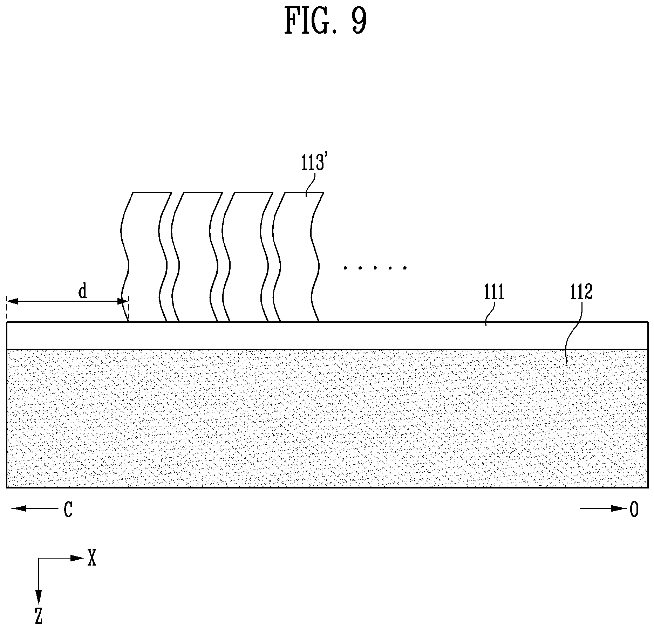

In another example, the bent region of a first flag portion 113' of the electrode assembly 10 according to the present disclosure may be rounded. FIG. 7 is a cross-sectional view showing a modification of FIG. 4. FIG. 8 is an enlarged view of the area R of FIG. 7. FIG. 9 is a plan view schematically showing the shape of an electrode of FIG. 7 before winding. Referring to FIGS. 7 to 9, an inner bent region b1' and/or an outer bent region b2' of the first flag portion 113' of the electrode assembly 10 according to the present example may be rounded and corrugated with repeated ridges and valleys. The ridge-shaped central portion of the first flag portion 113' may be the inner bent region b1', and the valley-shaped central portion thereof may be the outer bent region b2'.

In an embodiment of the present disclosure, the first flag portion 113 of the electrode assembly 10 according to the present disclosure may be separated by a predetermined starting distance d from one end located at the central portion of the wound first electrode 11 in a direction in which the electronic assembly is wound in the form of the roll. Referring to FIGS. 6 and 9, the first flag portion 113 may be separated by the predetermined starting distance d from one end of the electrode assembly 10 according to the present disclosure, for example, from a winding center C toward the other end, for example, a winding end O.

The starting distance d may refer to a region which forms a hollow of a core portion when the electrode assembly 10 is wound. In the electrode assembly 10 according to the present disclosure, the hollow may be formed in the core portion when the electronic device 10 is wound in a cylindrical shape.

In one example, a starting distance d in which the first flag portion 113 of the electrode assembly 10 according to the present disclosure is separated may be 200 mm or less. The length of the starting distance d may be 200 mm or less, 190 mm or less, 180 mm or less, 170 mm or less, 160 mm or less, or 150 mm or less. In addition, the length of the starting distance d may be, but is not limited to, 0 mm or more, more than 0 mm, 1 mm or more, 2 mm or more, 3 mm or more, 4 mm or more, or 5 mm or more. When the length of the starting distance d satisfies the above range, a hollow having an appropriate size may be formed when the electrode assembly 10 is wound, and an electrolyte solution injected through the hollow may be uniformly impregnated into the entire region of the electrode assembly.

In an embodiment of the present disclosure, the second electrode 12 of the electrode assembly 10 according to the present disclosure includes a second uncoated portion 121, a second flag portion 123 formed by extending a part of the second uncoated portion 121, and a second extension portion connecting the second uncoated portion 121 and the second flag portion 123, and the second flag portion 123 may include one or more inner bent regions bent in the winding center direction and one or more outer bent regions bent in an opposite direction to the winding center direction.

The second electrode 12 may include a second current collector, a second active material layer 122, and the second uncoated portion 121. The second current collector may be, but is not limited to, metal foil such as copper or aluminum. The second active material layer 122 may be formed on at least one surface of the second current collector, and may be arranged in contact with the second current collector.

The second uncoated portion 121 may refer to a region where the second active material layer 122 is not arranged on the second current collector of the second electrode 12. The second uncoated portion 121 may be arranged on one or more of two long sides of the second electrode 12, but the present disclosure is not limited thereto.

In one example, the second electrode 12 of the electrode assembly 10 according to the present disclosure may have the same configuration as one or more of the configurations of the first electrode 11 described above. For example, the second flag portion 123 of the second electrode 12 of the electrode assembly 10 according to the present disclosure may include an inner bent region bent in the winding center direction, and may include an outer bent region bent in an opposite direction to the winding center direction. In addition, one or more of the above descriptions of the first flag portion 113 may be applied to the second flag portion 123 of the second electrode 12.

The descriptions of the second electrode 12, the second uncoated portion 121, the second flag portion 123, the second extended portion, and the inner bent region and the outer bent region of the second flag portion 123 are the same as those of the first electrode 11, the first uncoated portion 111, the first flag portion 113, the first extension portion (a), and the inner bent region b1 and the outer bent region b2 of the first flag portion 113, and the like as described above, and thus will be omitted.

The electrode assembly according to the present disclosure may include the first electrode 11, the second electrode 12, and the separator 13 arranged between the first electrode 11 and the second electrode 12. The separator 13 may refer to a layer which physically separates the first electrode 11 and the second electrode 12. The separator 13 may be an insulating layer and include a polymer film, a porous nonwoven fabric, or the like, but the present disclosure is not limited thereto. The electrode assembly 10 according to the present disclosure may have a structure in which the first electrode 11, the separator 13, and the second electrode 12 are stacked.

In an embodiment of the present disclosure, the first electrode 11 of the electrode assembly 10 according to the present disclosure may be a cathode, and the second electrode 12 may be an anode. The first active material layer 112 may include a cathode active material, and the second active material layer 122 may include an anode active material, but the present disclosure is not limited thereto. In another example of the present disclosure, however, the first electrode 11 of the electrode assembly 10 may be an anode, and the second electrode 12 may be a cathode. The first active material layer 112 may include an anode active material, and the second active material layer 122 may include a cathode active material, but the present disclosure is not limited thereto.

The present disclosure also relates to a battery cell. A battery cell 1 according to another embodiment of the present disclosure includes: the electrode assembly 10 in which the first electrode 11, the second electrode 12, and the separator 13 arranged between the first electrode 11 and the second electrode 12 are wound in the form of a roll around a virtual winding center; and a case 20 receiving the electrode assembly 10, in which the first electrode 11 may include the first uncoated portion 111, the first flag portion 113 formed by extending a part of the first uncoated portion 111, and the first extension portion (a) connecting the first uncoated portion 111 and the first flag portion 113.

The first flag portion 113 may include one or more inner bent regions b1 bent in the winding center direction and one or more outer bent regions b2 bent in the opposite direction to the winding center direction.

The case 20 may have a cylindrical shape including an opening in which one surface is opened. The case 20 may receive the electrode assembly 10 therein through the opening. The electrode assembly 10 may be wound in the form of a roll and accommodated in the case 20. The case 20 may include, but is not limited to, various metals such as iron and aluminum, alloys in which these metals are combined, and materials such as plastic, ceramic, or carbon.

In an embodiment of the present disclosure, the first extension portion (a) of the electrode assembly 10 of the battery cell 1 according to the present disclosure is bent in the winding center direction, and the first bent region of the first flag portion 113 adjacent to the first extension portion (a) may be the inner bent region b1.

In an embodiment of the present disclosure, a bending angle of the first extension portion (a) of the electrode assembly 10 of the battery cell 1 according to the present disclosure and a bending angle of the inner bent region b1 of the first flag portion 113 may be different from each other.

In one example, the inner and/or outer bent regions of the first flag portion 113 of the electrode assembly 10 of the battery cell 1 according to the present disclosure may have an angled shape.

In another example, the inner and/or outer bent regions of the first flag portion 113' of the electrode assembly 10 of the battery cell 1 according to the present disclosure may be rounded.

In an embodiment of the present disclosure, the first flag portion 113 of the electrode assembly 10 of the battery cell 1 according to the present disclosure may be separated by the predetermined starting distance d from one end located at the center of the wound first electrode 11 in the winding direction in the form of the roll.

In an embodiment of the present disclosure, the second electrode 12 of the electrode assembly 10 of the battery cell 1 according to the present disclosure includes the second uncoated portion 121, the second flag portion 123 formed by extending a part of the second uncoated portion 121, and a second extension portion connecting the second uncoated portion 121 and the second flag portion 123, and the second flag portion 123 may include one or more inner bent regions bent in the winding center direction and one or more outer bent regions bent in an opposite direction to the winding center direction.

The description of the electrode assembly 10 of the battery cell 1 according to the present disclosure is the same as that of the electrode assembly described above, and thus will be omitted.

In an embodiment of the present disclosure, the battery cell 1 according to the present disclosure may further include a current collector plate 50 connected to the first flag portion 113. The current collector plate 50 may be arranged to be in contact with the first flag portion 113 of the electrode assembly 10, and may be electrically connected. To this end, the current collector plate 50 may include a conductive material such as copper, gold, silver, or aluminum.

When the battery cell 1 according to the present disclosure includes the current collector plate 50, the inner bent region b1 of the first flag portion of the electrode assembly 10 of the battery cell 1 of the present disclosure may be in contact with the current collector plate 50.

In one example, an end (e) of the first flag portion 113 of the electrode assembly 10 of the battery cell 1 according to the present disclosure may be in contact with the current collector plate.

In another example, the first flag portion 113 of the electrode assembly 10 of the battery cell 1 according to the present disclosure may include a plurality of regions in contact with the current collector plate 50 in a radial direction. As described above, the first flag portion 113 of the battery cell 1 according to the present disclosure may include the inner bent region b1 and the outer bent region b2, and the inner bent region b1 and the outer bent region b2 may be alternately arranged. When the first flag portion 113 of the battery cell 1 according to the present disclosure includes a plurality of inner bent regions b1, the plurality of inner bent regions b1 may be in contact with the current collector plate 50 a plurality of times. In addition, in the case where the first flag portion 113 of the battery cell 1 according to the present disclosure includes one inner bent region b1, the one inner bent region b1 of the first flag portion 113 and the end (e) of the first flag portion 113 may be in contact with the current collector plate 50.

FIGS. 5 and 8 are enlarged views of a region where the first flag portion of the battery cell 1 and the current collector plate are in contact with each other according to the present disclosure. Referring to FIGS. 5 and 8, the electrode assembly 10 of the battery cell 1 according to the present disclosure is wound and received in the case. Each of the first flag portions 113 and 113' drawn out to the upper portion of the electrode assembly 10 may contact the current collector plate 50 radially a plurality of times. As shown in FIGS. 5 and 8, the first flag portions 113 and 113' of the electrode assembly 10 of the battery cell 1 according to the present disclosure may include the inner bent regions b1 and b1' which are bent toward the winding center direction and the outer bent regions b2 and b2' which are bent in a direction opposite to the winding center direction, respectively, and the inner bent regions b1 and b1' may be arranged to be in contact with the current collector plate 50. As shown in FIGS. 5 and 8, the inner bent regions b1 and b1' of the first flag portions 113 and 113' and the ends (e) of the first flag portions 113 and 113' are arranged to be in contact with the current collector plate 50, so that the first flag portions 131 and 113' may be in contact with the current collector plate 50 a plurality of times in the radial direction.

When the first flag portions 113 and 113' are arranged to be in contact with the current collector plate 50 a plurality of times, the number of times the first flag portions 131 and 113' come into contact with the current collector plate 50 may be greater than the total number of flags included in the first flag portions 113 and 113', so that the contact efficiency between the electrode and the current collector plate may be improved, and the welding quality when welding the current collector plate 50 and the first flag may be improved.

In one example, the inner and/or outer bent region of the first flag portion 113 of the battery cell 1 according to the present disclosure may have an angled shape, and the flag portion may be in contact with the current collector plate in the angled region of the first flag portion 113. Referring to FIG. 5, as described above, the first flag portion 113 may include an inner bent region bent to define a predetermined angle, and the angled region of the inner bent region may be in contact with the current collector plate 50.

In another example, the bent region of the first flag portion 113' of the battery cell 1 according to the present disclosure may have a rounded shape, and the first flag portion 131' protruding in the rounded shape may be in contact with the current collector plate 50. Referring to FIG. 8, for example, the first flag portion 113' may have a corrugated shape with alternating ridge and valley patterns. The ridge-shaped central portion may be the inner bent region, and the valley-shaped central portion may be the outer bent region. The first flag portion of the battery cell according to the present example may be in contact with the current collector plate 50 in the inner bent region having the ridge shape.

In an embodiment of the present disclosure, the battery cell 1 according to the present disclosure may further include a first current collector plate in contact with the first flag portion 113 and a second current collector plate in contact with the second flag portion 123. The first flag portion 113 may be in contact with the first current collector plate a plurality of times in the radial direction, and the second flag portion 123 may be in contact with the second current collector plate a plurality of times in the radial direction.

In one example, when the battery cell according to the present disclosure includes the first current collector plate and/or the second current collector plate, the first current collector plate and/or second current collector plate may include a through hole penetrating along the winding axis. The through hole may be arranged in a central portion of the first current collector and/or the second current collector, and may be arranged at a position corresponding to the hollow of the core portion of the electrode assembly. The through hole may function as an injection hole for injecting an electrolyte solution in the manufacturing process of the battery cell.

In an embodiment of the present disclosure, the battery cell 1 according to the present disclosure may further include a cap plate 40 arranged on the opening of the case 20. The cap plate 40 may function to seal the opening of the case 20.

The cap plate 40 may include a terminal portion 30 arranged at a central portion thereof. The terminal portion 30 may be electrically connected to the first current collector plate 50 described above. One end of the terminal portion 30 may be connected to the first current collector plate 50 through the central portion of the cap plate 40. In addition, the terminal portion 30 and the first current collector plate 50 may be directly connected to each other or may be electrically connected to each other through a separate connection electrode, but the present invention is not limited thereto. The other end of the terminal portion 30 connected to the first current collector plate 50 may protrude to the outside of the cap plate 40 and function as an external terminal.

In one example, the terminal portion 30 may be arranged on a bottom surface of the case 20, which may mean that the terminal portion 30 is arranged at one side of the case 20 which is opposite to the cap plate 40. Although in the above embodiment, the terminal portion 30 is illustrated as being arranged at the center of the cap plate 40, the terminal portion 30 may be arranged on the bottom surface of the case which is opposite to that shown in FIG. 1.

In another embodiment, the battery cell according to the present disclosure may further include a second current collector plate and a connecting member (not shown) arranged between the second current collector plate and the case. When the battery cell according to the present disclosure further includes the connecting member (not shown), the second current collector plate and the case may be electrically connected through the connecting member (not illustrated).

The case of the battery cell according to the present disclosure may have a beading portion formed on the end portion at the opening, and the electrode assembly of the battery cell may be fixed by the beading portion.

It is understood by those skilled in the art that the plurality of exemplary embodiments described above are specific examples of the following aspects.

Aspect 1: An electronic assembly comprising: a first electrode including a first uncoated portion, a first flag portion formed by extending a part of the first uncoated portion, and a first extension portion connecting the first uncoated portion and the first flag portion; a second electrode; and a separator arranged between the first electrode and the second electrode, wherein the first electrode, the second electrode, and the separator are wound in a form of a roll around a virtual winding center, and wherein the first flag portion comprises at least one inner bent region bent in the winding center direction and at least one outer bent region bent in an opposite direction to the winding center direction.

Aspect 2: The electronic assembly according to Aspect 1, wherein the first extension portion is bent in the winding center direction, and wherein a first bent region of the first flag portion adjacent to the first extension portion is an inner bent region.

Aspect 3: The electronic assembly according to Aspect 2, wherein a bending angle of the first extension portion and a bending angle of the at least one inner bent region of the first flag portion are different from each other.

Aspect 4: The electronic assembly according to any one of the previous Aspects, wherein the at least one inner and/or outer bent region of the first flag portion has an angled shape.

Aspect 5: The electronic assembly according to any one of the previous Aspects, wherein the at least one inner and/or outer bent region of the first flag portion has a rounded shape.

Aspect 6: The electronic assembly according to any one of the previous Aspects, wherein the first flag portion is separated by a predetermined starting distance from one end located at a central portion of the first electrode wound around the virtual winding center in a direction in which the first electrode is wound in the form of the roll.

Aspect 7: The electronic assembly according to any one of the previous Aspects, wherein the second electrode comprises a second uncoated portion, a second flag portion formed by extending a part of the second uncoated portion, and a second extension portion connecting the second uncoded portion and the second flag portion, and wherein the second flag portion comprises at least one inner bent region bent in the winding center direction and at least one outer bent region bent in an opposite direction to the winding center direction.

Aspect 8: A battery cell, comprising: an electrode assembly in which a first electrode, a second electrode, and a separator arranged between the first electrode and the second electrode are wound in a form of a roll around a virtual winding center; a case receiving the electrode assembly; and a terminal portion protruding from the case, wherein the first electrode comprises a first uncoated portion, a first flag portion formed by extending a part of the first uncoated portion, and a first extension portion connecting the first uncoating portion and the first flag portion, and wherein the first flag portion comprises at least one inner bent region bent in a winding center direction and at least one outer bent region bent in an opposite direction to the winding center direction.

Aspect 9: The battery cell according to Aspect 8, wherein the first extension portion is bent in the winding center direction, and wherein a first bent region of the first flag portion adjacent to the first extension portion is an inner bent region.

Aspect 10: The battery cell according to Aspects 8 or 9, wherein the at least one inner and/or outer bent region of the first flag portion has an angled shape.

Aspect 11: The battery cell according to any one of Aspects 8 to 10, wherein the at least one inner and/or outer bent region of the first flag portion has a rounded shape.

Aspect 12: The battery cell according to any one of Aspects 8 to 11, further comprising a current collector plate connected to the first flag portion, wherein the at least one inner bent region of the first flag portion is in contact with the current collector plate.

Aspect 13: The battery cell according to Aspect 12, wherein an end of the first flag portion is in contact with the current collector plate.

Aspect 14: The battery cell according to Aspects 12 or 13, wherein the first flag portion comprises a plurality of regions in contact with the current collector plate in a radial direction.

Aspect 15: The battery cell according to any one of Aspects 8 to 14, wherein the second electrode comprises a second uncoated portion, a second flag portion formed by extending a part of the second uncoated portion, and a second extension portion connecting the second uncoated portion and the second flag portion, and wherein the second flag portion comprises at least one inner bent region bent in the winding center direction and at least one outer bent region bent in an opposite direction to the winding center direction.

According to an aspect of the present disclosure, an electrode assembly and a battery cell capable of improving contact efficiency between an electrode and a current collector plate may be provided.

According to another aspect of the present disclosure, an electrode assembly and a battery cell capable of improving welding quality may be provided.

According to another aspect of the present disclosure, an electrode assembly and a battery cell capable of reducing a defect rate may be provided.

The content described above is merely an example of applying the principles of the present disclosure, and other features may be further included without departing from the scope of embodiments according to the present disclosure.

## Claims

1. An electronic assembly comprising:
a first electrode including a first uncoated portion, a first flag portion formed by extending a part of the first uncoated portion, and a first extension portion connecting the first uncoated portion and the first flag portion;
a second electrode; and
a separator arranged between the first electrode and the second electrode,
wherein the first electrode, the second electrode, and the separator are wound in a form of a roll around a virtual winding center, and
wherein the first flag portion comprises at least one inner bent region bent in the winding center direction and at least one outer bent region bent in an opposite direction to the winding center direction.

2. The electronic assembly according to claim 1, wherein the first extension portion is bent in the winding center direction, and
wherein a first bent region of the first flag portion adjacent to the first extension portion is an inner bent region.

3. The electronic assembly according to claim 2, wherein a bending angle of the first extension portion and a bending angle of the at least one inner bent region of the first flag portion are different from each other.

4. The electronic assembly according to any one of the previous claims, wherein the at least one inner and/or outer bent region of the first flag portion has an angled shape.

5. The electronic assembly according to any one of the previous claims, wherein the at least one inner and/or outer bent region of the first flag portion has a rounded shape.

6. The electronic assembly according to any one of the previous claims, wherein the first flag portion is separated by a predetermined starting distance from one end located at a central portion of the first electrode wound around the virtual winding center in a direction in which the first electrode is wound in the form of the roll.

7. The electronic assembly according to any one of the previous claims, wherein the second electrode comprises a second uncoated portion, a second flag portion formed by extending a part of the second uncoated portion, and a second extension portion connecting the second uncoded portion and the second flag portion, and
wherein the second flag portion comprises at least one inner bent region bent in the winding center direction and at least one outer bent region bent in an opposite direction to the winding center direction.

8. A battery cell, comprising:
an electrode assembly in which a first electrode, a second electrode, and a separator arranged between the first electrode and the second electrode are wound in a form of a roll around a virtual winding center;
a case receiving the electrode assembly; and
a terminal portion protruding from the case,
wherein the first electrode comprises a first uncoated portion, a first flag portion formed by extending a part of the first uncoated portion, and a first extension portion connecting the first uncoating portion and the first flag portion, and
wherein the first flag portion comprises at least one inner bent region bent in a winding center direction and at least one outer bent region bent in an opposite direction to the winding center direction.

9. The battery cell according to claim 8, wherein the first extension portion is bent in the winding center direction, and
wherein a first bent region of the first flag portion adjacent to the first extension portion is an inner bent region.

10. The battery cell according to claims 8 or 9, wherein the at least one inner and/or outer bent region of the first flag portion has an angled shape.

11. The battery cell according to any one of claims 8 to 10, wherein the at least one inner and/or outer bent region of the first flag portion has a rounded shape.

12. The battery cell according to any one of claims 8 to 11, further comprising a current collector plate connected to the first flag portion,
wherein the at least one inner bent region of the first flag portion is in contact with the current collector plate.

13. The battery cell according to claim 12, wherein an end of the first flag portion is in contact with the current collector plate.

14. The battery cell according to claims 12 or 13, wherein the first flag portion comprises a plurality of regions in contact with the current collector plate in a radial direction.

15. The battery cell according to any one of claims 8 to 14**,** wherein the second electrode comprises a second uncoated portion, a second flag portion formed by extending a part of the second uncoated portion, and a second extension portion connecting the second uncoated portion and the second flag portion, and
wherein the second flag portion comprises at least one inner bent region bent in the winding center direction and at least one outer bent region bent in an opposite direction to the winding center direction.
